# EUROPEAN PATENT SPECIFICATION

(11) **EP 3 794 574 B1**
(45) Date of publication and mention of the grant of the patent: **25.11.2026**
(21) Application number: 19726103.5
(22) Date of filing: 16.05.2019
(51) Int. Cl.: G01C 21/20, G01C 23/00, G08G 5/21, G08G 5/53, G08G 5/55, G08G 5/57, G08G 5/59, G08G 5/74, G01C 21/00, G05D 1/00

(54) **APPARATUS, METHOD AND SYSTEM RELATING TO AIRCRAFT SYSTEMS**
VORRICHTUNG, VERFAHREN UND SYSTEM IM ZUSAMMENHANG MIT FLUGZEUGSYSTEMEN
APPAREIL, PROCÉDÉ ET SYSTÈME CONCERNANT DES SYSTÈMES D'AÉRONEF

(30) Priority: 18.05.2018 GB 201808158
(43) Date of publication of application: 24.03.2021
(73) Proprietor: University Of Bath, Bath, Bath and North East Somerset BA2 7AY (GB)
(72) Inventor: CLEAVER, David, Bath, Bath and North East Somerset BA2 6RJ (GB); DU BOIS, Jonathan, Bristol Bristol BS6 5HA (GB); IRAVANI, Pejman, Bradford on Avon, Bath and N.E. Somerset BA15 1JH (GB)
(74) Representative: Haseltine Lake Kempner LLP
(86) International application number: PCT/GB2019/051356
(87) International publication number: WO 2019/220130

(56) References cited:
- US-A1- 2007 285 283
- US-A1- 2007 285 283
- US-A1- 2016 189 549
- US-A1- 2016 275 801
- US-A1- 2017 076 610
- US-A1- 2018 045 814

## Description

### Technical Field

The embodiments described herein relate to an apparatus, method and system relating to aircraft systems, and in particular to an apparatus, method and system for controlling flight of an aircraft system, for example an unmanned aircraft system, based on ground hazards, and for determining risk liability values associated with flight of an aircraft system.

### Background

Unmanned aircraft systems (UASs, also commonly known as "drones") are becoming increasing popular for a variety of applications, including for example surveillance operations or the delivery of objects to remote locations.

An obstacle to the wide use of unmanned aircraft systems is the integration of such unmanned aircraft systems into national airspace. One concern is the risk of collision with ground hazards, such as buildings, power cables, mountains and so forth. Another concern is the damage that could be caused to humans or structures on the ground, for example as a result of a crash or failure of UASs.

US2007/0285283 discloses a navigational aid for a craft.

### Summary

It is an aim of the embodiments described herein to provide a method, apparatus and system which obviate or reduce at least one or more of the disadvantages mentioned above.

Aspects of the invention are set out in the independent claims appended hereto. Optional features are set out in the dependent claims.

### Brief description of the drawings

For a better understanding of examples of the present invention, and to show more clearly how the examples may be carried into effect, reference will now be made, by way of example only, to the following drawings in which:
Figure 1 shows an example of a method according to an embodiment;
Figure 2 shows an example of a method according to an embodiment;
Figure 3 shows an example of a method according to an embodiment;
Figure 4a shows an example of a two-dimensional liability map;
Figure 4b shows an example of a simplified illustration of a portion of a two-dimensional liability map;
Figure 5 shows an example of a method according to an embodiment;
Figure 6 shows an example to illustrate different failure modes in relation to nodes of voxels of a three-dimensional liability map;
Figure 7 shows another example of a three-dimensional liability map;
Figure 8 shows another example of a three-dimensional liability map;
Figure 9 shows a cross section through a three-dimensional liability map;
Figure 10 shows an example of flight trial data showing proportionate collision avoidance response;
Figure 11 shows an example of flight trial data showing disproportionate collision avoidance response;
Figure 12 shows an example of an unmanned aircraft system according to an embodiment;
Figure 13 shows an example of a system for controlling flight of an aircraft system according to an embodiment; and
Figure 14 shows an example of a method according to another aspect, for determining risk liability values; and
Figure 15 shows an example of a risk liability engine.

### Detailed description

The following sets forth specific details, such as particular embodiments for purposes of explanation and not limitation. But it will be appreciated by one skilled in the art that other embodiments may be employed apart from these specific details. In some instances, detailed descriptions of well-known methods, processes and devices are omitted so as not obscure the description with unnecessary detail. Those skilled in the art will appreciate that the functions described may be implemented in one or more apparatus or nodes using hardware circuitry (e.g., analog and/or discrete logic gates interconnected to perform a specialized function, ASICs, PLAs, etc.) and/or using software programs and data in conjunction with one or more digital microprocessors or general purpose computers. Apparatus or nodes that communicate using the air interface also have suitable radio communications circuitry. Moreover, where appropriate the technology can additionally be considered to be embodied entirely within any form of computer-readable memory, such as solidstate memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

**In** terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed, with some or all the computing functions being cloud based. Moreover, these terms also refer to other hardware capable of performing such functions and/or executing software, such as the example hardware recited above.

References herein will be made to the term "aircraft system", which is intended to embrace both unmanned aircraft systems (UASs) and manned aircraft systems.

References will also be made herein to the term "voxel", which is used to represent a volume in three-dimensional space. A three dimensional array of voxels can therefore be used to represent a larger three-dimensional space, each particular voxel referring to a point, volume or region in that three-dimensional space.

It is noted that a voxel may comprise any shape, including for example rectangular, cuboid, spherical or tetrahedral shapes. Different voxels in an array may have the same shape, or may have different shapes, or a combination thereof. Voxels may be of any size, for example according to a desired granularity by which the three-dimensional space is to be defined. Different voxels in an array may have the same size, or may have different sizes, or a combination thereof.

It is further noted that individual voxels in the array of voxels may be adjacent or contiguous, such that every particular point in the three dimensional space falls within a particular voxel. Alternatively, individual voxels may be spaced apart or non-contiguous.

The embodiments described herein are related to a method, apparatus and system for quantifying liability for aircraft systems, such as unmanned aircraft systems, from hazards on the ground. As will be described in greater detail in the description below, embodiments of the invention are related to deriving a liability map of a region of interest, for use in applications such as controlling the flight of an aircraft system, or determining risk liabilities associated with flights, or other applications as described later in the application. In some embodiments a two-dimensional (2D) liability map relating to ground hazards is determined, which may also be referred to as a 2D surface liability map. The 2D liability map may be used for applications such as controlling flight of an aircraft system, for example determining planned landing sites, determining emergency landing sites (e.g. during planning and/or in-flight). The 2D liability map may also be used by some embodiments to create a three-dimensional (3D) liability map, which in turn may be used for applications such as determining a risk liability value of a particular flight, or various other applications as described in further detail in the description below. It is noted that, as well as being derived from a 2D liability map, the 3D liability map may also be derived from other data, which is also described in greater detail later in the application.

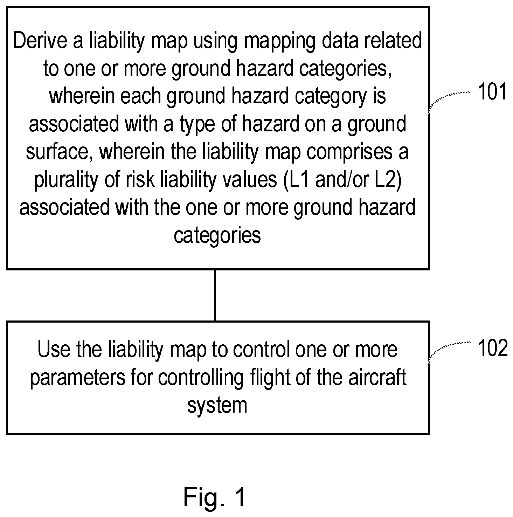

Figure 1 shows an example of a method according to an embodiment, for controlling flight of an aircraft system.

The method comprises, in step 101, deriving a liability map using mapping data related to one or more ground hazard categories, wherein each ground hazard category is associated with a type of hazard on a ground surface, and wherein the liability map comprises a plurality of risk liability values (L1 and/or L2) associated with the one or more ground hazard categories.

The method comprises using the liability map to control one or more parameters for controlling flight of the aircraft system, step 102.

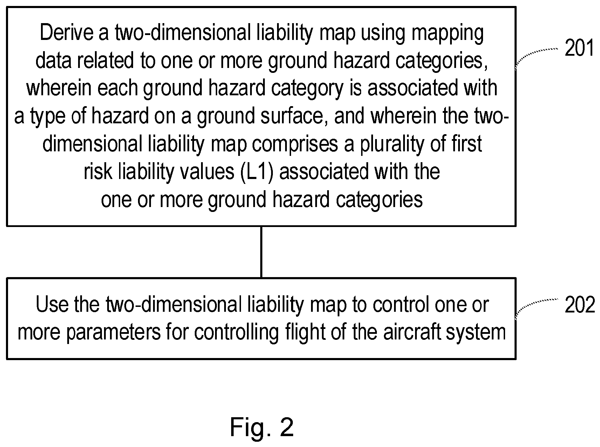

Figure 2 shows an example of a method according to an embodiment, for controlling flight of an aircraft system, in which a two-dimensional (2D) liability map is used.

The method comprises, in step 201, deriving a two-dimensional liability map using mapping data related to the one or more ground hazard categories, wherein the two-dimensional liability map comprises a plurality of first risk liability values associated with the one or more ground hazard categories.

The method comprises using the two dimensional liability map to control one or more parameters for controlling flight of the aircraft system, step 202.

The one or more parameters that may be controlled may comprise, for example, parameters that determine a flight path for an aircraft system, for example during landing, based on the 2D liability map, for example to avoid one or more ground hazards, or particular ground hazard categories (e.g. populated areas, roads, schools, etc.).

In another example, the one or more parameters that may be controlled may comprise a flight path associated with an emergency landing, for example when deciding where best to land after a failure mode of the aircraft system. As such, the method may be used to provide autonomous decision making in the event of a system failure of the aircraft system. For example, the method may be used to automatically detect emergency landing sites, or to avoid landing at certain sites, such as populated areas, roads, etc.

The 2D liability map has the advantage of providing increased situational awareness for an operator of an aircraft system, and enabling automatic or autonomous decision making.

As well as being used for these various applications, the 2D liability map may also be used for deriving a more complex three-dimensional (3D) liability map, as will be described later in the application.

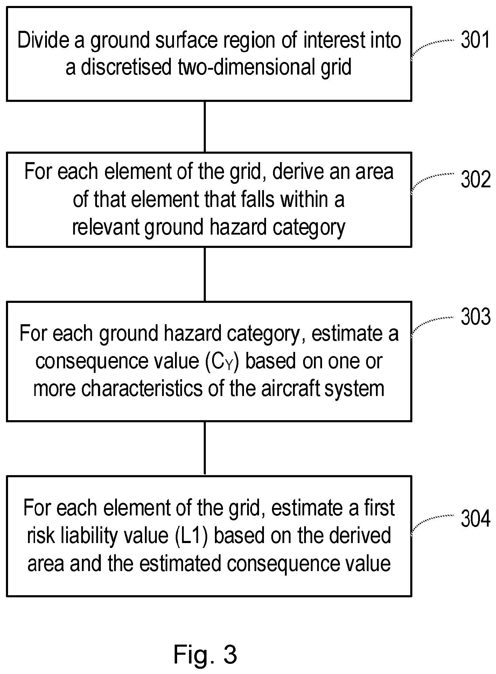

Figure 3 illustrates an example method for deriving the two-dimensional liability map according to step 201 of Figure 2.

The method comprises dividing a ground surface region of interest into a discretised two-dimensional grid, step 301.

The method comprises, for each element of the grid, deriving an area of that element that falls within a relevant ground hazard category, step 302. For example, the step may comprise deriving what area of the grid element comprises ground hazard categories such as buildings, roads, airports, schools, mountains, etc.

The method comprises, for each ground hazard category, estimating a consequence value C_{Y} based on one or more characteristics of the aircraft system, step 303. For example, for an aircraft system that comprises a very light drone, a consequence value of colliding with a building will be low compared to a consequence value of an aircraft system comprising a more substantial drone.

The consequence values may be estimated, for example, using one or more parameters, e.g. a parameter or a combination of parameters selected from a set of possible parameters, whereby the selected parameter(s) can differ, for example, depending on the ground hazard category, and/or the type of aircraft system.

For example, for a ground hazard category relating to "roads", the one or more parameters may include:
1. Aircraft Wing Span - which determines the crash area;
2. Traffic Density - which in some examples can be live traffic data, or in other examples mean traffic data (e.g. from a Department for Transport) for that particular road for that particular time, or in other examples mean traffic data for roads of that type, e.g. factoring in the time of day;
3. Vehicle Stopping Distances - for example using mean vehicle speeds (e.g. on that road type).

Embodiments of the invention can use any combination of the parameters above, or other parameters similar to those above, in order to provide an estimate of the number of vehicles that would be involved if an aircraft system crashed on that road. This information may be combined with other parameters relating to the aircraft system, for example the aircraft kinetic energy, to estimate the severity of an aircraft failure, e.g. fatalities. In some examples standard liability values may be used to associate a figure to the damage caused to vehicles, people, etc.

From the above it can be seen that each ground hazard category may have one or more parameters used to estimate a consequence of a particular aircraft system, or type of aircraft system, having a failure.

The method of Figure 3 comprises, for each element of the grid, estimating a first risk liability value (L1) based on the derived area and the estimated consequence value, step 304.

As such, the 2D liability map comprises a matrix of first risk liability values (L1) for a particular aircraft system. Likewise a different aircraft system will have a corresponding matrix of first risk liability values (L1). As such, each element of the grid may comprise a set of first risk liability values (e.g. L1₁ to L1_{N}), each member of the set relating to a particular aircraft system or type of aircraft system, from N different aircraft system types. Thus, the first risk liability values of the 2D liability map can be different for different aircraft systems, i.e. depending on how they interact/relate with different ground hazard categories. The consequence values noted above can depend, for example, on the 'landing' characteristics of an aircraft system in each of its failure modes. In such embodiments the 2D liability map can be dependent on factors such as: size of aircraft system, velocity in failure mode, probability of failure mode.

In some examples the step of deriving the area of the element that falls within a relevant ground hazard category may comprise using mapping data, for example open source mapping data that is available for categorising the surface area of the earth into one of a number of different categories. It is noted that different levels or degrees of categorisation may be used depending on the desired complexity or granularity of the system.

According to one example the step of estimating a first risk liability value L1 comprises multiplying the area ratio for a particular ground hazard by its associated consequence value C_{Y}, and summing these for all areas of the grid element. As such, in one example a first risk liability value L1 comprises: $L 1 = \sum area ratio * consequence value \left({C}_{Y}\right)$

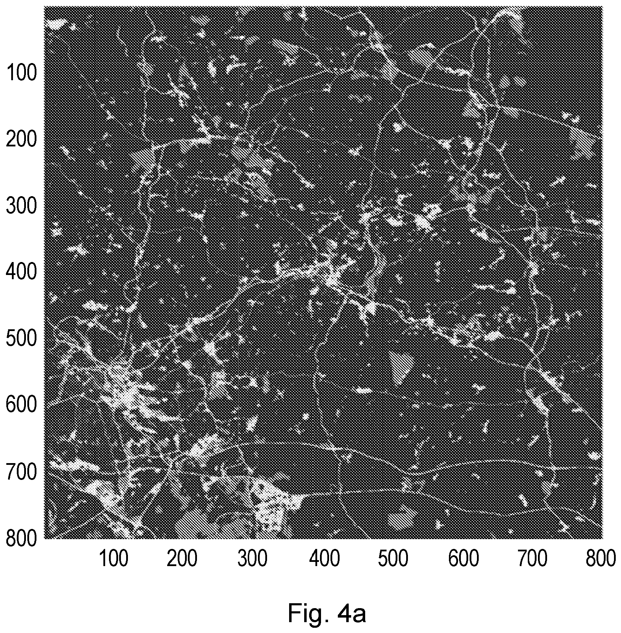

Figure 4a shows an example of a 2D liability map, wherein different levels of greyscale illustrate different levels of first risk liability value, e.g. a darker value of the greyscale corresponding to a higher first risk liability value, or a lighter value of the greyscale corresponding to a lower first risk liability value.

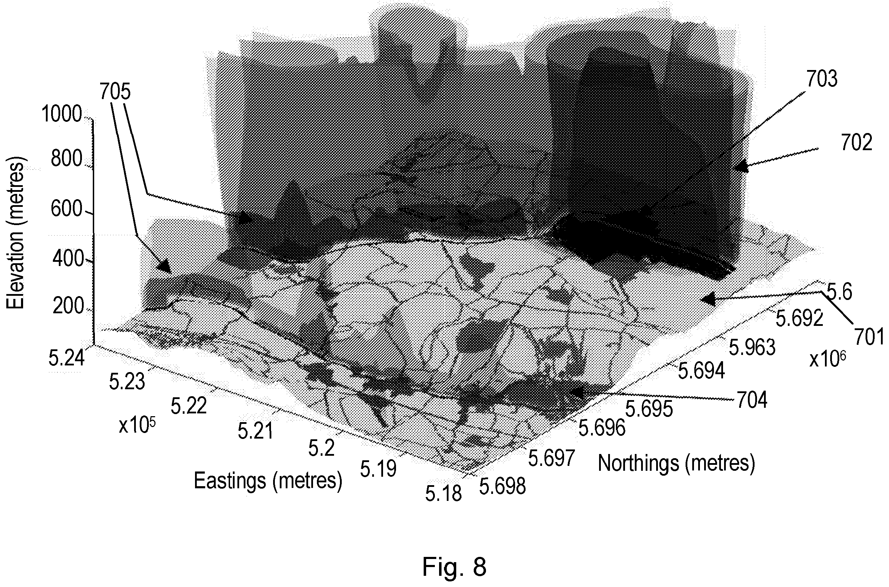

It is noted that references herein to 2D liability map may comprise a 2D matrix of values representative of values on a 3D terrain surface. In some examples the 2D liability map is assumed to be flat, with the calculations/aircraft using Above Ground Level altitude. In other examples the 2D liability map is assumed to be a surface representative of the terrain, for example as in Figure 8 described below, wherein the calculations/aircraft use Absolute altitude.

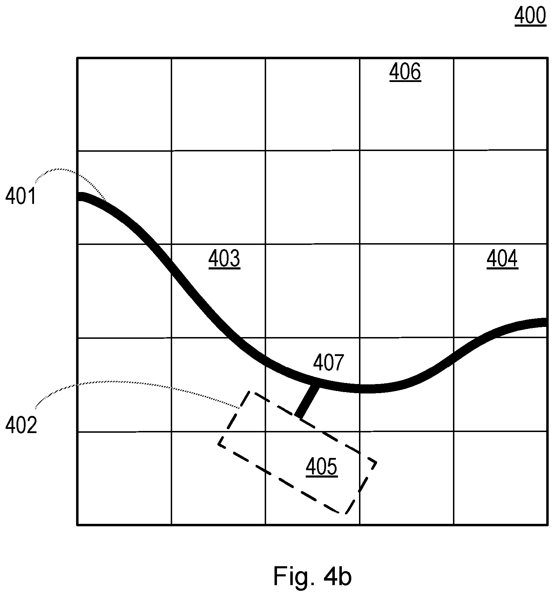

Figure 4b shows an example of a simplified portion of a 2D liability map, to illustrate how an element of a grid has a corresponding first risk liability value.

Figure 4b shows a plan view of an example of a region of interest 400 of a surface, i.e. ground surface. This region of interest 400 comprises a road 401 and a building 402, for example a school.

As described in Figure 3 above, the region of interest 400 is divided into a discretised two-dimensional grid. It is noted that although the grid in Figure 4b is shown as comprising elements having the same surface area, the grid elements may differ in size, or may have different scales depending upon the level of detail in a particular region of interest.

As mentioned in Figure 3 above, the method comprises, for each element of the grid, deriving an area of that element that falls within a relevant ground hazard category. For example, the step may comprise deriving what area of the grid element 403 comprises a ground hazard category such as a building, a road, an airport, a school, a mountain, etc.

In the example of Figure 4b, grid element 403 will have a certain area relating to the ground hazard category relating to roads, which will be a greater area compared to grid element 404 for the ground hazard relating to roads, i.e. which has a smaller area for roads.

The grid element 405 will have a certain area relating to the ground hazard category relating to schools.

The grid element 407, on the other hand, will have a certain area relating to the ground hazard category relating to roads, and a certain area relating to the ground hazard category relating to schools.

For each ground hazard category, when estimating a consequence value based on one or more characteristics of the aircraft system, in the example of Figure 4b the consequence value associate with a school may be higher than a consequence value associate with a road.

As such, the first risk liability value L₄₀₅ estimated for grid element 405 (i.e. having a school) may be higher than the first risk liability value L₄₀₃ estimated for grid element 403 (i.e. having a road).

The first risk liability values L1 may be used for various applications, including controlling the flight of an aircraft system, determining a preferred flight path for an aircraft system, or determining a liability associated with a particular flight, for example for use with determining insurance premiums, as will be described later in the application.

According to another aspect there is provided a method for deriving a three-dimensional liability map using mapping data related to the one or more ground hazard categories, wherein the three-dimensional liability map comprises a plurality of second risk liability values (L2) associated with the one or more ground hazard categories. The three-dimensional liability map is used to control the one or more parameters for controlling flight of the aircraft system.

In some examples the second risk liability values of the 3D liability map are determined for each node/voxel of a 3D region directly from an input data set.

In other examples, as mentioned above, the 2D liability map as described above may be used to derive the three-dimensional, 3D, liability map.

The 3D liability map may be based on a plurality of possible failure modes of an aircraft system and a related probability frequency of the occurrence of each possible failure mode.

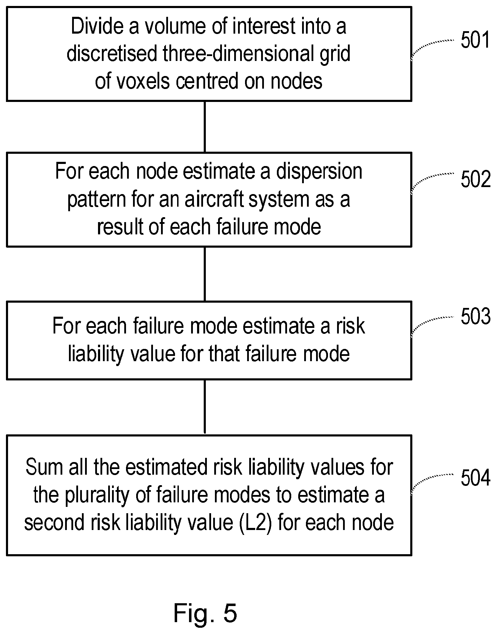

Referring to Figure 5, in one embodiment the method of deriving a three-dimensional liability map may comprise dividing a volume of interest into a discretised three-dimensional grid of voxels centred on nodes, step 501.

The method may comprise, for each node, estimating a dispersion pattern for the aircraft system as a result of each failure mode, step 502.

For each failure mode, a risk liability value is estimated for that failure mode, step 503. For example, for a controlled descent the risk liability value may be the minimum risk liability from the 2D liability map within the dispersion range, whereas for an uncontrolled decent the risk liability value may comprise a mean or Gaussian weighted mean of the 2D surface risk liability within the dispersion range.

The method comprises summing all the estimated risk liability values for the failure modes to estimate the second risk liability value L2, e.g. a total risk liability value, for each node, step 504.

In some examples, estimating a risk liability value for a particular failure mode at a particular node is based on the dispersion pattern for that failure node in relation to the position of the node of that voxel in relation to a ground surface (e.g. height above ground), and the position of the node in relation to first risk liability values of elements of the two-dimensional liability map. In other words, the risk liability values can take into consideration the height of an aircraft system at the point of failure, and the first risk liability values contained within the dispersion region, in order to estimate an overall risk liability value for that failure mode.

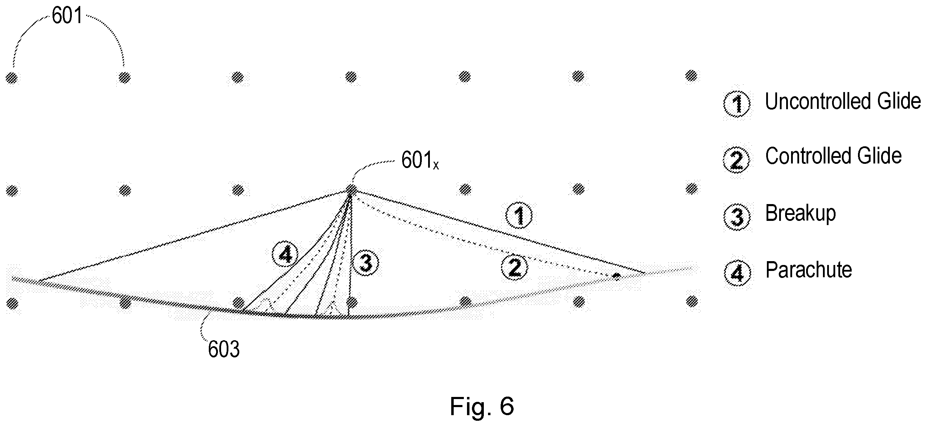

Figure 6 shows an example of dispersion patterns for different types of failure mode. The nodes 601 represent nodes of a 3D liability map, i.e. corresponding to voxels in a three-dimensional region of interest, in relation to a ground surface 603.

Assuming a failure occurs to an aircraft system around node 601_{X}, then reference "1" represents a dispersion pattern corresponding to an uncontrolled glide, for example if the aircraft system has a power failure. With this type of failure mode, the aircraft system is modelled as landing anywhere within the glide range of the aircraft system relative to the point at which the failure mode occurred.

Reference "2" represents a dispersion pattern corresponding to a controlled glide, for example if the aircraft system has an engine failure, but is still able to control its flight path to some degree.

Reference "3" represents a dispersion pattern corresponding to a breakup, for example as a result of an explosion or catastrophic failure, which is modelled as the aircraft system landing approximately underneath the point at which the failure mode of the aircraft system occurred, with some effect due to residual momentum and wind speed.

Reference "4" represents a dispersion pattern corresponding to a parachute, for example as a result of failure of the aircraft system followed by the deployment of a parachute, which is modelled as the aircraft system landing nearby the point at which the failure mode of the aircraft system occurred (for example modelled based on typical wind directions in that area).

It is noted that other dispersion patterns may be used, and/or other failure modes. It is also noted that different aircraft system types may have different dispersion patterns associated therewith.

As described above in Figure 5, since the method according to this embodiment sums all the estimated risk liability values for the failure modes in order to estimate the second risk liability value L2 for each node, this means that the second risk liability value L2 takes account, for each voxel, the risk associated with different types of failure modes that could occur in that voxel, and how these risks relate to the ground hazards in a surrounding area on a ground surface.

In some embodiments the one or more parameters for controlling flight are controlled in relation to the estimated first risk liability values L1. In other words, a flight may be controlled using the 2D liability map.

In other embodiments, one or more parameters for controlling flight are controlled in relation to the estimated second risk liability values L2. In other words, a flight may be controlled using the 3D liability map, i.e. based on the second risk liability values for the nodes relating to voxels.

In other embodiments, one or more parameters for controlling flight are controlled in relation to the estimated first and second risk liability values L1, L2.

It is noted that, although the 3D liability map in the examples above is shown as being derived based on a 2D liability map, the 3D liability map may also be derived directly from other data, for example including mapping data comprising information relating to ground hazard categories, and/or data relating to aircraft systems.

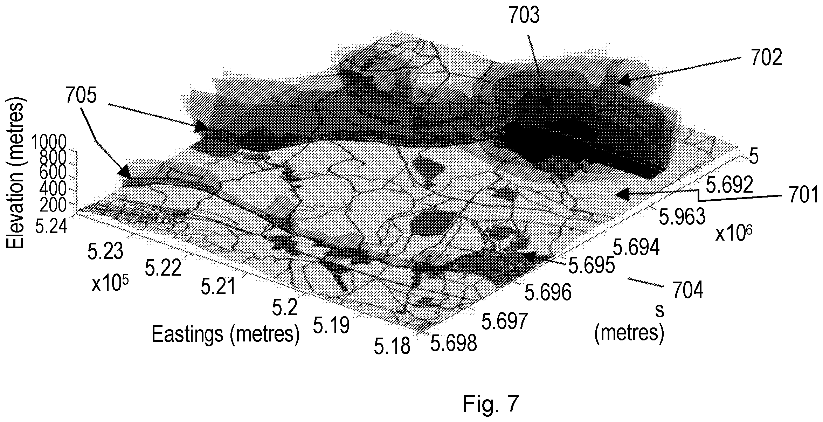

Figure 7 shows a first example of a region including renders of both a 2D and 3D liability map. Different surface contour levels of greyscale illustrate different levels of first risk liability value, the isosurfaces representing the second risk liability values. Figure 7 shows a contour of a 2D liability map 701, and isosurfaces of a 3D liability map 702. The dark areas 703 correspond to second risk liability values in the vicinity of an airport. The areas 705 correspond to second risk liability values relating to roads, while the dark areas 704 correspond to second risk liability values relating to a town.

Figure 8 shows another, more detailed, example of a 2D and 3D liability map as found in Figure 7, but which has been exaggerated in the Z-axis in order to better illustrate the different risk liability values in the 3D liability map. As with Figure 7, Figure 8 shows a contour of a 2D liability map 701, and isosurfaces of a 3D liability map 702. The dark areas 703 correspond to second risk liability values in the vicinity of an airport. The areas 705 correspond to second risk liability values relating to roads, while the dark areas 704 correspond to second risk liability values relating to a town.

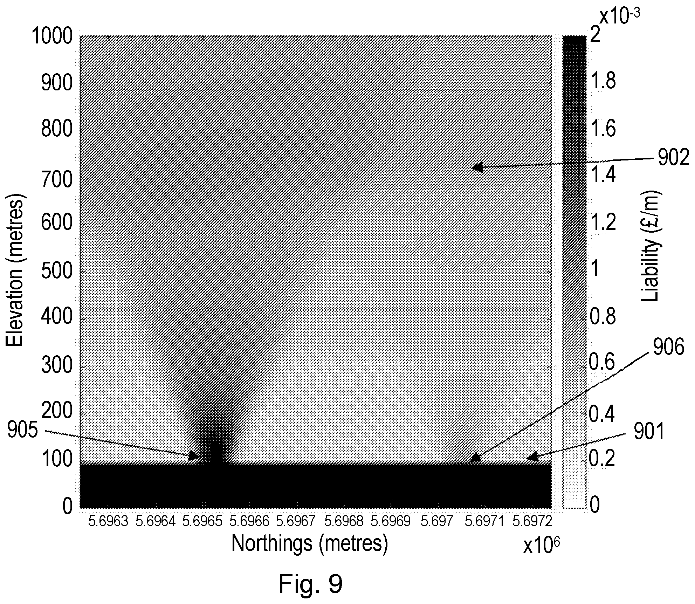

Figure 9 shows an example of a two-dimensional slice through 2D and 3D liability maps, to help illustrate further the upward propagation of risk liability. As can be seen from Figure 9, in this embodiment it can be seen that the second risk liability values 902 of the 3D liability map decrease as a function of height above a ground surface, and in particular above a road 905 and a railway 906.

In some embodiments, the method comprises using the first and/or second risk liability values to control a flight parameter forming part of a collision avoidance procedure, for example controlling the path of an aircraft system in order to avoid a collision. Such embodiments may be used in conjunction with probabilistic trajectory planning systems, which may be used with a similar liability approach, to provide a cost function to ensure a proportionate and safe collision avoidance response.

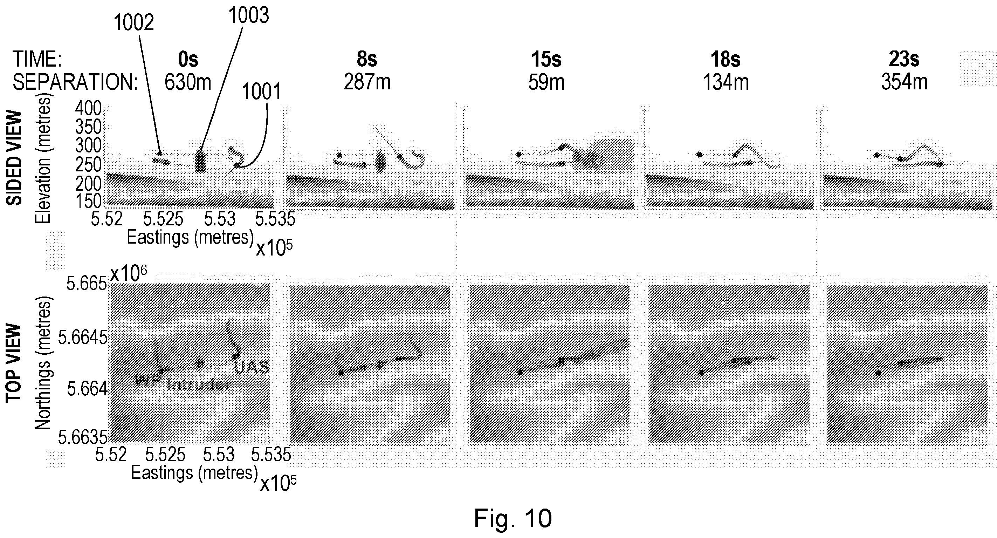

Figure 10 shows an example of flight trial data showing proportionate collision avoidance response, with the top set of Figures showing a side view separated over time, and the bottom set of Figures showing corresponding top views separated over time. The aircraft system, for example an unmanned aircraft system (UAS) is illustrated using reference 1001, with the intruder aircraft illustrated by reference 1002. The second risk liability values are shown as a greyscale isosurface that follows the contours of the terrain but with an offset representative of obstacle height, illustrated by reference 1003. For clarity the level of the isosurface is set high to hide the detailed features observed in the second risk liability as observed in Figures 7 and 8. The liability associated with a probabilistic collision prediction is illustrated as an isosurface bubble using reference 1003. This uses the same units as the second risk liability value to ensure proportionality.

As can be seen from these figures, in response to a collision avoidance procedure being triggered, the aircraft system 1001 takes action to avoid the intruder 1002 whilst taking account of risk liability values associated with the 3D liability map. It will therefore give preference to lower second risk liability options and the cost associated with penetrating the second risk liability value isosurface is very high so it will also avoid the ground with a proportionate buffer. Furthermore, the ground liability exposure is necessary as a cost function, i.e. in order to provide a proportionate response. Without it there is no cost to travelling further/longer and therefore all hazards trigger extreme, disproportionate, avoidance manoeuvres.

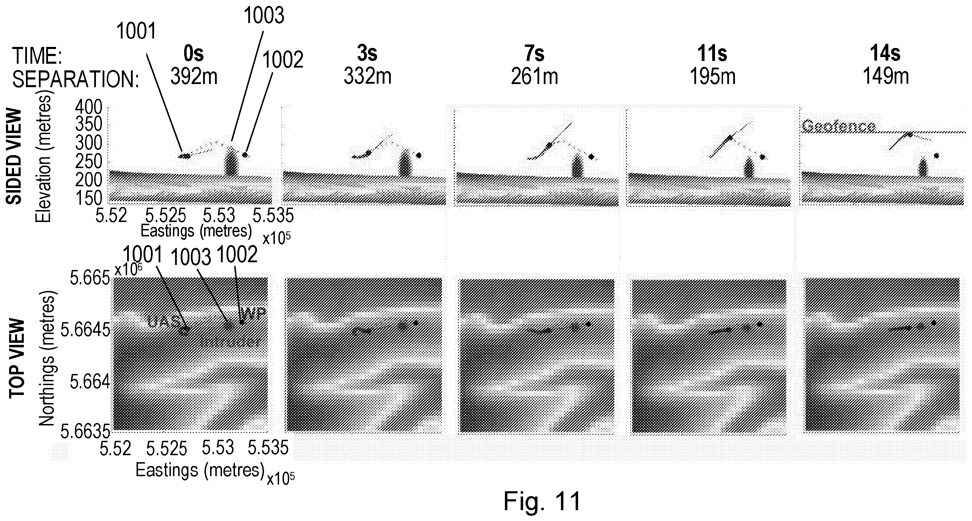

Figure 11 is similar to Figure 10, in that it shows an example of flight trial data, but showing disproportionate collision avoidance response, i.e. rather than proportionate as shown in Figure 10. As before, the top set of Figures show a side view separated over time, with the bottom set of Figures showing corresponding top views separated over time. The aircraft system, for example an unmanned aircraft system (UAS) is illustrated using reference 1001 and has a target waypoint of reference 1002. Along its path is a static, hovering, intruder aircraft, illustrated by reference 1003. As the intruder aircraft is static the liability associated with a probabilistic collision prediction is shown as a series of semi-transparent isosurfaces bubbles centered on reference 1003.

In this scenario the second risk liability value is set to zero everywhere and therefore not visible. Without external limits it will therefore fly into the ground as part of an avoidance manoeuvre. As can be seen from these figures, in response to a collision avoidance procedure being triggered, the aircraft system 1001 takes action to avoid the intruder 1003. However, because there is no risk liability as a cost function, the aircraft system climbs at its maximum rate up to its maximum altitude, such that it triggers a geofence failsafe. This is therefore a disproportionate response because there is no cost associated with liability exposure and every intruder, no matter the distance or absolute risk, will illicit an extreme avoidance manoeuvre.

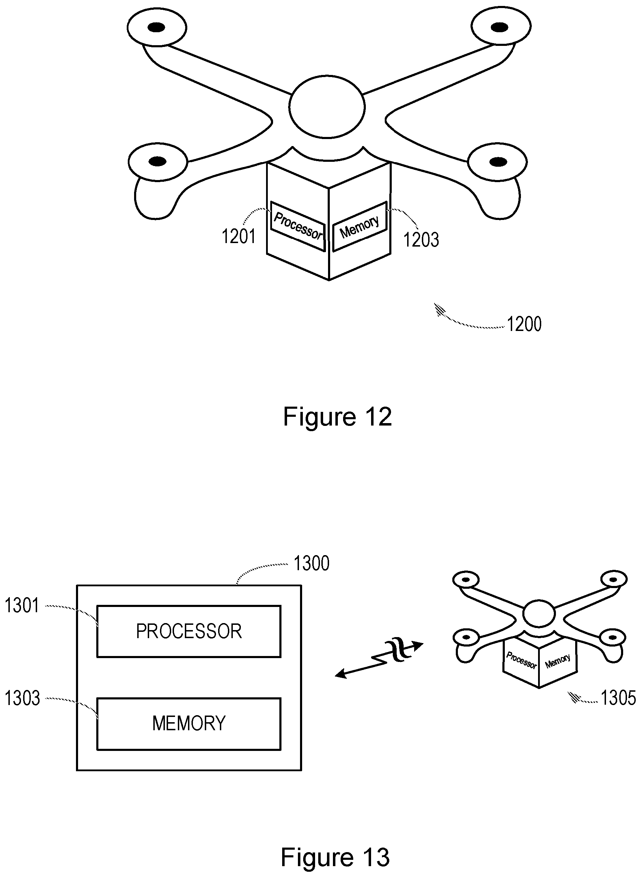

Figure 12 shows an example of an aircraft system 1200, for example an unmanned aircraft system, according to an embodiment. The aircraft system 1200 comprises a processor 1201 and a memory 1203, said memory 1203 containing instructions executable by said processor 1203.

In one example the aircraft system 1200 is operative to the use a liability map to control one or more parameters for controlling flight of the aircraft system, wherein the liability map comprises a plurality of risk liability values (L1 and/or L2) associated with one or more ground hazard categories, and wherein each ground hazard category is associated with a type of hazard on a ground surface.

In another example the aircraft system 1200 is operative to use a two-dimensional liability map, for example as described herein, to control one or more parameters for controlling flight of the aircraft system. The two-dimensional liability map comprises a plurality of first risk liability values L1 associated with the one or more ground hazard categories, and wherein each ground hazard category is associated with a type of hazard on a ground surface.

In another example the aircraft system 1200 is operative to use a three-dimensional liability map, for example as described herein, to control one or more parameters for controlling flight of the aircraft system. The three-dimensional liability map comprises a plurality of second risk liability values L2 associated with the one or more ground hazard categories, and wherein each ground hazard category is associated with a type of hazard on a ground surface.

The aircraft system 1200 may be further operative to perform the method as defined in any one of the methods described above for deriving the two-dimensional and three-dimensional liability maps, and how they are used.

In some embodiments, the aircraft system 1200 is configured to determine the 2D and/or 3D liability maps itself, for use with controlling flight, and may include the use of historical flight data and/or real time flight data.

According to another example, rather than determining the 2D and/or 3D liability maps itself, another system may be configured to determine the 2D and/or 3D liability maps in accordance with any of the embodiments described herein, for example a remote control center or flight control system (some or all of which may be cloud based), wherein the processor 1201 of the aircraft system 1200 is configured to control its fight according to the received 2D and/or 3D liability maps.

Figure 13 shows an example of a flight control system 1300 according to another embodiment, for controlling an aircraft system 1305, for example an unmanned aircraft system. The flight control system 1300 comprises a processor 1301 and a memory 1303, said memory 1303 containing instructions executable by said processor 1301.

In one example the flight control system 1300 is operative to the use a liability map to control one or more parameters for controlling flight of the aircraft system, wherein the liability map comprises a plurality of risk liability values (L1 and/or L2) associated with one or more ground hazard categories, and wherein each ground hazard category is associated with a type of hazard on a ground surface.

In another example, the flight control system 1300 is operative to derive a two-dimensional liability map using mapping data related to one or more ground hazard categories, wherein each ground hazard category is associated with a type of hazard on a ground surface. The two-dimensional liability map comprises a plurality of first risk liability values L1 associated with the one or more ground hazard categories. The flight control system 1300 is operative to use the two-dimensional liability map to control one or more parameters for controlling flight of the aircraft system.

In another example, the flight control system 1300 is operative to use a three-dimensional liability map, for example as described herein, to control one or more parameters for controlling flight of the aircraft system. The three-dimensional liability map comprises a plurality of second risk liability values L2 associated with the one or more ground hazard categories, and wherein each ground hazard category is associated with a type of hazard on a ground surface.

The one or more parameters for controlling flight of the aircraft system 1305 may then be transmitted to the aircraft system 1305, e.g. UAS.

The flight control system 1300 may be operative to perform the method as defined in other embodiments described herein for deriving the two-dimensional and three-dimensional liability maps, and how they are used.

It is noted that in the flight control system 1300, the processing by the processor 1301 may comprise processing on a ground station (e.g. located on-site at a traffic control location), or processing at a remote server (e.g. a cloud based server), or a combination of both.

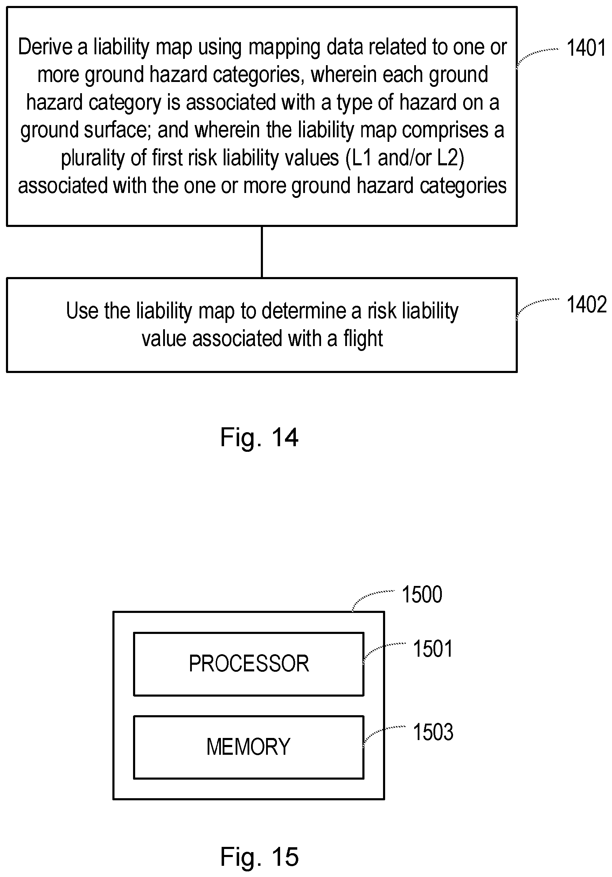

Figure 14 describes a method according to another embodiment, for determining a risk liability value associated with a flight of an aircraft system in relation to hazards on a ground surface.

According to one example the method comprises deriving a liability map using mapping data related to one or more ground hazard categories, wherein each ground hazard category is associated with a type of hazard on a ground surface, and wherein the liability map comprises a plurality of risk liability values (L1 and/or L2) associated with the one or more ground hazard categories, step 1401.

The liability map is used to determine a risk liability value (L_{FLIGHT}) associated with a flight, step 1402.

According to another example the method comprises deriving a two-dimensional liability map using mapping data related to one or more ground hazard categories, wherein each ground hazard category is associated with a type of hazard on a ground surface, and wherein the two-dimensional liability map comprises a plurality of first risk liability values L1 associated with the one or more ground hazard categories.

The method comprises using the two-dimensional liability map to determine a risk liability value associated with a flight.

In some embodiments deriving the two-dimensional liability map comprises: dividing a ground surface region of interest into a discretised two-dimensional grid; for each element of the grid, deriving an area of that element that falls within a relevant ground hazard category; for each ground hazard category, estimating a consequence value (C_{Y}) based on one or more characteristics of the aircraft system; and for each element of the grid, estimating a first risk liability value (L1) based on the derived area and the estimated consequence value.

For example, estimating a first risk liability value L1 may comprise: $L 1 = \sum area ratio * consequence value \left({C}_{Y}\right)$

The method may further comprise the steps of deriving a three-dimensional liability map based on a plurality of possible failure modes of the aircraft system and a related probability frequency of the occurrence of each possible failure mode, wherein the three-dimensional liability map comprises a plurality of second risk liability values.

According to another embodiment, the method comprises deriving a three-dimensional liability map using mapping data related to the one or more ground hazard categories, wherein the three-dimensional liability map comprises a plurality of second risk liability values (L2) associated with the one or more ground hazard categories, and using the three-dimensional liability map to control the one or more parameters for controlling flight of the aircraft system.

In some embodiments, deriving the three-dimensional liability map comprises: dividing a volume of interest into a discretised three-dimensional grid of voxels centred on nodes; for each node estimating a dispersion pattern for an aircraft system as a result of each failure mode; for each failure mode estimating a risk liability value for that failure mode; and summing all the estimated risk liability values for the plurality of failure modes to estimate a second risk liability value L2 for each node.

In some examples, estimating a risk liability value for a particular failure mode at a particular node is based on the dispersion pattern for that failure node in relation to the position of the node in relation to the ground surface, and the position of the node in relation to the first risk liability values of elements of the two-dimensional liability map.

In some embodiments, determining a risk liability value associated with a flight comprises summing a plurality of first risk liability values corresponding to a path of the flight. For example, if a planned flight path of a particular aircraft system is desired to go over a plurality of grid elements E₁ to E₂₀₀ of a 2D liability map between a starting point and an end point, the individual first risk liability values associated with each of the plurality of grid elements E₁ to E₂₀₀ between the starting point and the end point may be summed in order to determine a risk liability value L_{FLIGHT} for the planned flight.

In other embodiments, determining a risk liability value associated with a flight comprises summing a plurality of second risk liability values corresponding to a path of the flight. For example, if a planned flight path of a particular aircraft system is planned via a plurality of voxels V₁ to V₂₀₀ of a 3D liability map between a starting point and an end point, the individual second risk liability values associated with each of the plurality of voxels V₁ to V₂₀₀ between the starting point and the end point may be summed in order to determine a risk liability value L_{FLIGHT} for the planned flight.

As noted earlier, in some examples the second risk liability values, as described above, are derived from the first risk liability values, e.g. as a processing step to calculate the second risk liability values. However, it is noted that the second risk liability values may be determined without necessary deriving the first risk liability values beforehand, for example using other information, including for example mapping data, ground hazard data, consequence data, aircraft system data. It is noted that determining the first risk liability values can be useful for providing other useful applications, such as selecting emergency landing sites, or providing a simplified (e.g. computationally faster but less accurate) version to use the first liability values for path planning.

In some examples, this risk liability value L_{FLIGHT} for a planned flight may be used to determine whether the path of the planned flight should be changed, for example by searching for an alternative flight path having a lower risk liability value.

In some examples a planned flight may only be allowed to take place if the risk liability value L_{FLICHT} is below a certain threshold.

In other embodiments, this risk liability value L_{FLIGHT} for a planned flight may be used to determine an insurance premium associated with that planned flight. In some examples different flight paths, or portions of flight paths, may have insurance premium associated with the risk liability values determined for those flight paths, or portions of flight paths. In this way, an insurance premium can be associated with real ground hazard data, e.g. based on the ground hazard categories, and how they are used in the 2D and 3D liability maps in conjunction with different aircraft system types and different failure modes.

Figure 15 shows an example of a risk liability engine 1500 for determining a risk liability value associated with a flight of an aircraft system in relation to hazards on a ground surface. The risk liability engine 1500 comprises a processor 1501 and a memory 1503, said memory 1503 containing instructions executable by said processor 1501.

In one example, the risk liability engine 1500 is operative to: derive a liability map using mapping data related to one or more ground hazard categories, wherein each ground hazard category is associated with a type of hazard on a ground surface, wherein the liability map comprises a plurality of risk liability values (L1 and/or L2) associated with the one or more ground hazard categories; and, use the liability map to determine a risk liability value (L_{FLIGHT}) associated with a flight.

In another example, the risk liability engine 1500 is operative to: derive a two-dimensional liability map using mapping data related to one or more ground hazard categories, wherein each ground hazard category is associated with a type of hazard on a ground surface; and wherein the two-dimensional liability map comprises a plurality of first risk liability values L1 associated with the one or more ground hazard categories; and use the two-dimensional liability map to determine a risk liability value associated with a flight.

In another example, the risk liability engine 1500 is operative to: derive a three-dimensional liability map using mapping data related to one or more ground hazard categories, wherein each ground hazard category is associated with a type of hazard on a ground surface; and wherein the three-dimensional liability map comprises a plurality of second risk liability values L2 associated with the one or more ground hazard categories; and use the three-dimensional liability map to determine a risk liability value associated with a flight.

The risk liability engine 1500 may be operative to perform the method as described in any of the embodiments herein.

From the above it can be seen that, in some embodiments described herein the risk liability values may be numerical values, e.g. for use with controlling other parameters, such as flight control parameters. In such embodiments the first and/or second risk liability values may be used to control the flight path of an aircraft system, for example to reduce a potential risk or liability. An aircraft system may be controlled dynamically using the first and/or second risk liability values, including for example in response to an emergency situation, e.g. to find a suitable path for landing, or to avoid a potential collision. In some embodiments, in high-risk regions, an aircraft system is controlled to fly at higher altitudes (which has an advantage of providing an option for the aircraft system to glide clear of a hazard in the event of a controlled system failure). In low-risk regions (e.g. fields) an aircraft system may be controlled to fly, for example, at low altitude so as to minimise dispersion in the event of an uncontrolled system failure.

In other embodiments the first and/or second risk liability values may be associated with financial values, for example to estimate an insurance premium associated with a particular flight path of an aircraft system, for example giving a range of liability values, e.g. between £0.4 per km to £500 per km. This has an advantage of enabling an insurer provider to distinguish between operations in a relevant manner.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for controlling flight of an aircraft system, the method comprising:
deriving (101) a two-dimensional liability map using mapping data related to a plurality of ground hazard categories, wherein deriving the liability map comprises categorising an area of the map to one of the plurality of ground hazard categories, wherein each ground hazard category is associated with a different type of hazard on a ground surface, wherein the two-dimensional liability map comprises a plurality of risk liability values (L1) associated with the plurality of ground hazard categories; and
using (102) the two-dimensional liability map to control one or more parameters for controlling flight of the aircraft system, wherein deriving the two-dimensional liability map comprises:
dividing (301) a ground surface region of interest into a discretised two-dimensional grid;
for (302) each element of the grid, deriving an area of that element that falls within a relevant ground hazard category;
for (303) each ground hazard category, estimating a consequence value (C_{Y}) based on one or more characteristics of the aircraft system; and
for (304) each element of the grid, estimating a first risk liability value (L1) based on the derived area and the estimated consequence value.

2. A method as claimed in claim 1, wherein estimating a first risk liability value (L1) comprises: $L 1 = \sum area ratio * consequence value \left({C}_{Y}\right)$

3. A method as claimed in any one of the preceding claims, comprising:
deriving a three-dimensional liability map using mapping data related to the plurality of ground hazard categories, wherein the three-dimensional liability map comprises a plurality of second risk liability values (L2) associated with the plurality of ground hazard categories, and using the three-dimensional liability map to control the one or more parameters for controlling flight of the aircraft system.

4. A method as claimed in any one of claims 1 to 2, the method further comprising the steps of deriving a three-dimensional liability map based on a plurality of possible failure modes of the aircraft system and a related probability frequency of the occurrence of each possible failure mode, wherein the three-dimensional liability map comprises a plurality of second risk liability values.

5. A method as claimed in claim 4, wherein deriving the three-dimensional liability map comprises:
dividing (501) a volume of interest into a discretised three-dimensional grid of voxels centred on nodes;
for (502) each node estimating a dispersion pattern for an aircraft system as a result of each failure mode;
for (503) each failure mode estimating a risk liability value for that failure mode; and
summing (504) all the estimated risk liability values for the plurality of failure modes to estimate a second risk liability value (L2) for each node.

6. A method as claimed in claim 5, wherein estimating a risk liability value for a particular failure mode at a particular node is based on the dispersion pattern for that failure node in relation to the position of the node in relation to the ground surface, and the position of the node in relation to first risk liability values of elements of a two-dimensional liability map.

7. A method as claimed in any one of claims 1 to 6, wherein one or more parameters for controlling flight are controlled in relation to the first risk liability values (L1).

8. A method as claimed in claim 3 to 7, wherein one or more parameters for controlling flight are controlled in relation to the second risk liability values (L2).

9. An aircraft system (1200) comprising a processor (1201) and a memory (1203), said memory (1203) containing instructions executable by said processor (1201), whereby said aircraft system (1200) is operative to:
use a two-dimensional liability map to control one or more parameters for controlling flight of the aircraft system;
wherein the two-dimensional liability map comprises a plurality of risk liability values (L1) associated with a plurality of ground hazard categories, wherein an area of the map is categorised to one of the plurality of ground hazard categories, and wherein each ground hazard category is associated with a different type of hazard on a ground surface, whereby said aircraft system is operable to derive the two-dimensional liability map by:
dividing a ground surface region of interest into a discretised two-dimensional grid;
for each element of the grid, deriving an area of that element that falls within a relevant ground hazard category;
for each ground hazard category, estimating a consequence value (C_{Y}) based on one or more characteristics of the aircraft system; and
for each element of the grid, estimating a first risk liability value (L1) based on the derived area and the estimated consequence value.

10. An aircraft system (1200) as claimed in claim 9, wherein said aircraft system (1200) is operative to perform the method as defined in any one of claims 2 to 8.

11. A flight control system (1300) for controlling an aircraft system (1305), and comprising a processor (1301) and a memory (1303), said memory (1303) containing instructions executable by said processor (1301), whereby said flight control system (1300) is operative to:
derive a two-dimensional liability map using mapping data related to a plurality of ground hazard categories, wherein deriving the liability map comprises categorising an area of the map to one of the plurality of ground hazard categories, wherein each ground hazard category is associated with a different type of hazard on a ground surface; and
wherein the two-dimensional liability map comprises a plurality of risk liability values (L1) associated with the plurality of ground hazard categories; and
use the two-dimensional liability map to control one or more parameters for controlling flight of the aircraft system, whereby said flight control system is operable to derive the two-dimensional liability map by:
dividing a ground surface region of interest into a discretised two-dimensional grid;
for each element of the grid, deriving an area of that element that falls within a relevant ground hazard category;
for each ground hazard category, estimating a consequence value (C_{Y}) based on one or more characteristics of the aircraft system; and
for each element of the grid, estimating a first risk liability value (L1) based on the derived area and the estimated consequence value.

12. A method for determining a risk liability value associated with a flight of an aircraft system in relation to hazards on a ground surface, the method comprising:
deriving (1401) a two-dimensional liability map using mapping data related to a plurality of ground hazard categories, wherein deriving the liability map comprises categorising an area of the map to one of the plurality of ground hazard categories, wherein each ground hazard category is associated with a different type of hazard on a ground surface; and
wherein the two-dimensional liability map comprises a plurality of risk liability values (L1) associated with the plurality of ground hazard categories; and
using (1402) the two-dimensional liability map to determine a risk liability value (L_{FLIGHT}) associated with a flight, wherein deriving the two-dimensional liability map comprises:
dividing a ground surface region of interest into a discretised two-dimensional grid;
for each element of the grid, deriving an area of that element that falls within a relevant ground hazard category;
for each ground hazard category, estimating a consequence value (C_{Y}) based on one or more characteristics of the aircraft system; and
for each element of the grid, estimating a first risk liability value (L1) based on the derived area and the estimated consequence value.

13. A risk liability engine (1500) for determining a risk liability value associated with a flight of an aircraft system in relation to hazards on a ground surface, the risk liability engine comprising a processor (1501) and a memory (1503), said memory (1503) containing instructions executable by said processor (1501), whereby said risk liability engine (1500) is operative to:
derive a two-dimensional liability map using mapping data related to a plurality of ground hazard categories, wherein deriving the liability map comprises categorising an area of the map to one of the plurality of ground hazard categories, wherein each ground hazard category is associated with a different type of hazard on a ground surface; and
wherein the two-dimensional liability map comprises a plurality of risk liability values (L1) associated with the plurality of ground hazard categories; and
use the two-dimensional liability map to determine a risk liability value (L_{FLIGHT}) associated with a flight, wherein deriving the two-dimensional liability map comprises:
dividing a ground surface region of interest into a discretised two-dimensional grid;
for each element of the grid, deriving an area of that element that falls within a relevant ground hazard category;
for each ground hazard category, estimating a consequence value (C_{Y}) based on one or more characteristics of the aircraft system; and
for each element of the grid, estimating a first risk liability value (L1) based on the derived area and the estimated consequence value.

## Patentansprüche

1. Verfahren zur Steuerung des Fluges eines Flugzeugsystems, wobei das Verfahren Folgendes umfasst:
Ableiten (101) einer zweidimensionalen Haftungskarte unter Verwendung von Kartierungsdaten, die eine Mehrzahl von Bodengefahrenkategorien betreffen, wobei das Ableiten der Haftungskarte das Kategorisieren einer Fläche der Karte in eine aus der Mehrzahl von Bodengefahrenkategorien umfasst, wobei jede Bodengefahrenkategorie mit einer anderen Art von Gefahr auf einer Bodenoberfläche verknüpft ist, wobei die zweidimensionale Haftungskarte eine Mehrzahl von Risikohaftungswerten (L1) umfasst, die mit der Mehrzahl von Bodengefahrenkategorien verknüpft sind; und
Verwenden (102) der zweidimensionalen Haftungskarte zur Steuerung eines oder mehrerer Parameter zur Steuerung des Fluges des Flugzeugsystems, wobei das Ableiten der zweidimensionalen Haftungskarte Folgendes umfasst:
Unterteilen (301) eines interessierenden Bodenoberflächenbereichs in ein diskretisiertes zweidimensionales Gitter;
für (302) jedes Element des Gitters, Ableiten einer Fläche dieses Elements, die in eine relevante Bodengefahrenkategorie fällt;
für (303) jede Bodengefahrenkategorie, Schätzen eines Konsequenzwerts (C_{Y}) basierend auf einer oder mehreren Merkmalen des Flugzeugsystems; und
für (304) jedes Element des Gitters, Schätzen eines ersten Risikohaftungswerts (L1) basierend auf der abgeleiteten Fläche und dem geschätzten Konsequenzwert.

2. Verfahren nach Anspruch 1, wobei das Schätzen eines ersten Risikohaftungswerts (L1) Folgendes umfasst: $L 1 = \sum Flächenverhältnis * Konsequenzwert \left({C}_{Y}\right)$

3. Verfahren nach einem der vorhergehenden Ansprüche, umfassend:
Ableiten einer dreidimensionalen Haftungskarte unter Verwendung von Kartierungsdaten, die die Mehrzahl von Bodengefahrenkategorien betreffen, wobei die dreidimensionale Haftungskarte eine Mehrzahl von zweiten Risikohaftungswerten (L2) umfasst, die mit der Mehrzahl von Bodengefahrenkategorien verknüpft sind, und Verwenden der dreidimensionalen Haftungskarte zur Steuerung des einen oder der mehreren Parameter zur Steuerung des Fluges des Flugzeugsystems.

4. Verfahren nach einem der Ansprüche 1 bis 2, wobei das Verfahren ferner die Schritte des Ableitens einer dreidimensionalen Haftungskarte basierend auf einer Mehrzahl möglicher Ausfallmodi des Flugzeugsystems und einer zugehörigen Wahrscheinlichkeitshäufigkeit des Auftretens jedes möglichen Ausfallmodus umfasst, wobei die dreidimensionale Haftungskarte eine Mehrzahl von zweiten Risikohaftungswerten umfasst.

5. Verfahren nach Anspruch 4, wobei das Ableiten der dreidimensionalen Haftungskarte Folgendes umfasst:
Unterteilen (501) eines interessierenden Volumens in ein diskretisiertes dreidimensionales Gitter von Voxeln, die auf Knoten zentriert sind;
für (502) jeden Knoten Schätzen eines Dispersionsmusters für ein Flugzeugsystem als Folge jedes Ausfallmodus;
für (503) jeden Ausfallmodus Schätzen eines Risikohaftungswerts für diesen Ausfallmodus; und
Summieren (504) aller geschätzten Risikohaftungswerte für die Mehrzahl von Ausfallmodi, um einen zweiten Risikohaftungswert (L2) für jeden Knoten zu schätzen.

6. Verfahren nach Anspruch 5, wobei das Schätzen eines Risikohaftungswerts für einen bestimmten Ausfallmodus an einem bestimmten Knoten auf dem Dispersionsmuster für diesen Ausfallknoten in Bezug auf die Position des Knotens in Bezug auf die Bodenoberfläche und der Position des Knotens in Bezug auf erste Risikohaftungswerte von Elementen einer zweidimensionalen Haftungskarte basiert.

7. Verfahren nach einem der Ansprüche 1 bis 6, wobei ein oder mehrere Parameter zur Steuerung des Fluges in Bezug auf die ersten Risikohaftungswerte (L1) gesteuert werden.

8. Verfahren nach Anspruch 3 bis 7, wobei ein oder mehrere Parameter zur Steuerung des Fluges in Bezug auf die zweiten Risikohaftungswerte (L2) gesteuert werden.

9. Flugzeugsystem (1200), umfassend einen Prozessor (1201) und einen Speicher (1203), wobei der Speicher (1203) Anweisungen enthält, die von dem Prozessor (1201) ausgeführt werden können, wodurch das Flugzeugsystem (1200) betriebsfähig ist, um:
eine zweidimensionale Haftungskarte zu verwenden, um einen oder mehrere Parameter zur Steuerung des Fluges des Flugzeugsystems zu steuern;
wobei die zweidimensionale Haftungskarte eine Mehrzahl von Risikohaftungswerten (L1) umfasst, die mit einer Mehrzahl von Bodengefahrenkategorien verknüpft sind, wobei eine Fläche der Karte in eine aus der Mehrzahl von Bodengefahrenkategorien kategorisiert wird, und wobei jede Bodengefahrenkategorie mit einer anderen Art von Gefahr auf einer Bodenoberfläche verknüpft ist, wodurch das Flugzeugsystem betreibbar ist, um die zweidimensionale Haftungskarte durch Folgendes abzuleiten:
Unterteilen eines interessierenden Bodenoberflächenbereichs in ein diskretisiertes zweidimensionales Gitter;
für jedes Element des Gitters, Ableiten einer Fläche dieses Elements, die in eine relevante Bodengefahrenkategorie fällt;
für jede Bodengefahrenkategorie, Schätzen eines Konsequenzwerts (C_{Y}) basierend auf einer oder mehreren Merkmalen des Flugzeugsystems; und
für jedes Element des Gitters, Schätzen eines ersten Risikohaftungswerts (L1) basierend auf der abgeleiteten Fläche und dem geschätzten Konsequenzwert.

10. Flugzeugsystem (1200) nach Anspruch 9, wobei das Flugzeugsystem (1200) betriebsfähig ist, um das in einem der Ansprüche 2 bis 8 definierte Verfahren durchzuführen.

11. Flugsteuerungssystem (1300) zur Steuerung eines Flugzeugsystems (1305) und umfassend einen Prozessor (1301) und einen Speicher (1303), wobei der Speicher (1303) Anweisungen enthält, die von dem Prozessor (1301) ausgeführt werden können, wodurch das Flugsteuerungssystem (1300) betriebsfähig ist, um:
eine zweidimensionale Haftungskarte unter Verwendung von Kartierungsdaten abzuleiten, die eine Mehrzahl von Bodengefahrenkategorien betreffen, wobei das Ableiten der Haftungskarte das Kategorisieren einer Fläche der Karte in eine aus der Mehrzahl von Bodengefahrenkategorien umfasst, wobei jede Bodengefahrenkategorie mit einer anderen Art von Gefahr auf einer Bodenoberfläche verknüpft ist; und
wobei die zweidimensionale Haftungskarte eine Mehrzahl von Risikohaftungswerten (L1) umfasst, die mit der Mehrzahl von Bodengefahrenkategorien verknüpft sind; und
die zweidimensionale Haftungskarte zu verwenden, um einen oder mehrere Parameter zur Steuerung des Fluges des Flugzeugsystems zu steuern, wodurch das Flugsteuerungssystem betreibbar ist, um die zweidimensionale Haftungskarte durch Folgendes abzuleiten:
Unterteilen eines interessierenden Bodenoberflächenbereichs in ein diskretisiertes zweidimensionales Gitter;
für jedes Element des Gitters, Ableiten einer Fläche dieses Elements, die in eine relevante Bodengefahrenkategorie fällt;
für jede Bodengefahrenkategorie, Schätzen eines Konsequenzwerts (C_{Y}) basierend auf einer oder mehreren Merkmalen des Flugzeugsystems; und
für jedes Element des Gitters, Schätzen eines ersten Risikohaftungswerts (L1) basierend auf der abgeleiteten Fläche und dem geschätzten Konsequenzwert.

12. Verfahren zur Bestimmung eines Risikohaftungswerts, der mit einem Flug eines Flugzeugsystems verknüpft ist, in Bezug auf Gefahren auf einer Bodenoberfläche, wobei das Verfahren Folgendes umfasst:
Ableiten (1401) einer zweidimensionalen Haftungskarte unter Verwendung von Kartierungsdaten, die eine Mehrzahl von Bodengefahrenkategorien betreffen, wobei das Ableiten der Haftungskarte das Kategorisieren einer Fläche der Karte in eine aus der Mehrzahl von Bodengefahrenkategorien umfasst, wobei jede Bodengefahrenkategorie mit einer anderen Art von Gefahr auf einer Bodenoberfläche verknüpft ist; und
wobei die zweidimensionale Haftungskarte eine Mehrzahl von Risikohaftungswerten (L1) umfasst, die mit der Mehrzahl von Bodengefahrenkategorien verknüpft sind; und
Verwenden (1402) der zweidimensionalen Haftungskarte zur Bestimmung eines Risikohaftungswerts (L_{FLIGHT}), der mit einem Flug verknüpft ist, wobei das Ableiten der zweidimensionalen Haftungskarte Folgendes umfasst:
Unterteilen eines interessierenden Bodenoberflächenbereichs in ein diskretisiertes zweidimensionales Gitter;
für jedes Element des Gitters, Ableiten einer Fläche dieses Elements, die in eine relevante Bodengefahrenkategorie fällt;
für jede Bodengefahrenkategorie, Schätzen eines Konsequenzwerts (C_{Y}) basierend auf einer oder mehreren Merkmalen des Flugzeugsystems; und
für jedes Element des Gitters, Schätzen eines ersten Risikohaftungswerts (L1) basierend auf der abgeleiteten Fläche und dem geschätzten Konsequenzwert.

13. Risikohaftungs-Engine (1500) zur Bestimmung eines Risikohaftungswerts, der mit einem Flug eines Flugzeugsystems verknüpft ist, in Bezug auf Gefahren auf einer Bodenoberfläche, wobei die Risikohaftungs-Engine einen Prozessor (1501) und einen Speicher (1503) umfasst, wobei der Speicher (1503) Anweisungen enthält, die von dem Prozessor (1501) ausgeführt werden können, wodurch die Risikohaftungs-Engine (1500) betriebsfähig ist, um:
eine zweidimensionale Haftungskarte unter Verwendung von Kartierungsdaten abzuleiten, die eine Mehrzahl von Bodengefahrenkategorien betreffen, wobei das Ableiten der Haftungskarte das Kategorisieren einer Fläche der Karte in eine aus der Mehrzahl von Bodengefahrenkategorien umfasst, wobei jede Bodengefahrenkategorie mit einer anderen Art von Gefahr auf einer Bodenoberfläche verknüpft ist; und
wobei die zweidimensionale Haftungskarte eine Mehrzahl von Risikohaftungswerten (L1) umfasst, die mit der Mehrzahl von Bodengefahrenkategorien verknüpft sind; und
die zweidimensionale Haftungskarte zu verwenden, um einen Risikohaftungswert (L_{FLIGHT}) zu bestimmen, der mit einem Flug verknüpft ist, wobei das Ableiten der zweidimensionalen Haftungskarte Folgendes umfasst:
Unterteilen eines interessierenden Bodenoberflächenbereichs in ein diskretisiertes zweidimensionales Gitter;
für jedes Element des Gitters, Ableiten einer Fläche dieses Elements, die in eine relevante Bodengefahrenkategorie fällt;
für jede Bodengefahrenkategorie, Schätzen eines Konsequenzwerts (C_{Y}) basierend auf einer oder mehreren Merkmalen des Flugzeugsystems; und
für jedes Element des Gitters, Schätzen eines ersten Risikohaftungswerts (L1) basierend auf der abgeleiteten Fläche und dem geschätzten Konsequenzwert.

## Revendications

1. Procédé de commande de vol d'un système d'aéronef, le procédé comprenant :
la déduction (101) d'une carte de responsabilité bidimensionnelle en utilisant des données cartographiques relatives à une pluralité de catégories de risques terrestres, dans lequel la déduction de la carte de responsabilité comprenant la catégorisation d'une zone de la carte selon l'une des pluralités de catégories de risques terrestres, dans lequel chaque catégorie de risque terrestre est associée à un type de risque différent sur une surface terrestre, dans lequel la carte de responsabilité bidimensionnelle comprend une pluralité de valeurs de responsabilité en cas de risque (L1) associées à la pluralité de catégories de risques terrestres ; et
l'utilisation (102) de la carte de responsabilité bidimensionnelle pour commander un ou plusieurs paramètres de commande de vol du système d'aéronef, dans lequel la déduction de la carte de responsabilité bidimensionnelle comprend :
la division (301) d'une région d'intérêt de surface terrestre en une grille bidimensionnelle discrétisée ;
pour (302) chaque élément de la grille, la déduction d'une zone de cet élément qui se trouve au sein d'une catégorie de risque terrestre pertinente ;
pour (303) chaque catégorie de risque terrestre, l'estimation d'une valeur de conséquence (C_{Y}) basée sur une ou plusieurs caractéristiques du système d'aéronef ; et
pour (304) chaque élément de la grille, l'estimation d'une première valeur de responsabilité en cas de risque (L1) basée sur la zone déduite et la valeur de conséquence estimée.

2. Procédé selon la revendication 1, dans lequel l'estimation d'une première valeur de responsabilité en cas de risque (L1) comprend : $L 1 = \sum rapport de surface * valeur de conséquence \left({C}_{Y}\right)$

3. Procédé selon l'une quelconque des revendications précédentes, comprenant :
la déduction d'une carte de responsabilité tridimensionnelle en utilisant des données cartographiques relatives à la pluralité de catégories de risques terrestres, dans lequel la carte de responsabilité tridimensionnelle comprend une pluralité de secondes valeurs de responsabilité en cas de risque (L2) associées à la pluralité de catégories de risques terrestres, et l'utilisation de la carte de responsabilité tridimensionnelle pour commander les un ou plusieurs paramètres de commande de vol du système d'aéronef.

4. Procédé selon l'une quelconque des revendications 1 à 2, le procédé comprenant en outre les étapes consistant à déduire une carte de responsabilité tridimensionnelle basée sur une pluralité de modes de défaillance possibles du système d'aéronef et une fréquence de probabilité associée de l'occurrence de chaque mode de défaillance possible, dans lequel la carte de responsabilité tridimensionnelle comprend une pluralité de secondes valeurs de responsabilité en cas de risque.

5. Procédé selon la revendication 4, dans lequel l'obtention de la carte de responsabilité tridimensionnelle comprend :
la division (501) d'un volume d'intérêt en une grille tridimensionnelle discrétisée de voxels centrée sur des nœuds ;
pour (502) chaque nœud estimant un modèle de dispersion pour un système d'aéronef à la suite de chaque mode de défaillance ;
pour (503) chaque mode de défaillance, l'estimation d'une valeur de responsabilité en cas de risque pour ce mode de défaillance ; et
l'addition (504) de toutes les valeurs de responsabilité en cas de risque estimées pour la pluralité des modes de défaillance afin d'estimer une seconde valeur de responsabilité en cas de risque (L2) pour chaque nœud.

6. Procédé selon la revendication 5, dans lequel l'estimation d'une valeur de responsabilité en cas de risque pour un mode de défaillance particulier au niveau d'un nœud particulier est basée sur le modèle de dispersion de ce nœud de défaillance par rapport à la position du nœud par rapport à la surface terrestre, et la position du nœud par rapport aux premières valeurs de responsabilité en cas de risque des éléments d'une carte de responsabilité bidimensionnelle.

7. Procédé selon l'une quelconque des revendications 1 à 6, dans lequel un ou plusieurs paramètres de commande de vol sont commandés par rapport aux premières valeurs de responsabilité en cas de risque (L1).

8. Procédé selon les revendications 3 à 7, dans lequel un ou plusieurs paramètres de commande de vol sont commandés par rapport aux secondes valeurs de responsabilité en cas de risque (L2).

9. Système d'aéronef (1200) comprenant un processeur (1201) et une mémoire (1203), ladite mémoire (1203) contenant des instructions exécutables par ledit processeur (1201), moyennant quoi ledit système d'aéronef (1200) peut fonctionner pour :
utiliser une carte de responsabilité bidimensionnelle pour commander un ou plusieurs paramètres de commande de vol du système d'aéronef ;
dans lequel la carte de responsabilité bidimensionnelle comprend une pluralité de valeurs de responsabilité en cas de risque (L1) associées à une pluralité de catégories de risques terrestres, dans lequel une zone de la carte est catégorisée dans l'une de la pluralité de catégories de risques terrestres, et dans lequel chaque catégorie de risque terrestre est associée à un type de risque différent sur une surface terrestre, moyennant quoi ledit système d'aéronef peut fonctionner pour déduire la carte de responsabilité bidimensionnelle par :
division d'une région d'intérêt de surface terrestre en une grille bidimensionnelle discrétisée ;
pour chaque élément de la grille, la déduction d'une zone de cet élément qui se trouve au sein d'une catégorie de risque terrestre pertinente ;
pour chaque catégorie de risque terrestre, l'estimation d'une valeur de conséquence (C_{Y}) basée sur une ou plusieurs caractéristiques du système d'aéronef ; et
pour chaque élément de la grille, l'estimation d'une première valeur de responsabilité en cas de risque (L1) basée sur la zone déduite et la valeur de conséquence estimée.

10. Système d'aéronef (1200) selon la revendication 9, dans lequel ledit système d'aéronef (1200) peut fonctionner pour réaliser le procédé selon l'une quelconque des revendications 2 à 8.

11. Système de commande de vol (1300) destiné à commander un système d'aéronef (1305), et comprenant un processeur (1301) et une mémoire (1303), ladite mémoire (1303) contenant des instructions exécutables par ledit processeur (1301), moyennant quoi ledit système de commande de vol (1300) peut fonctionner pour :
déduire une carte de responsabilité bidimensionnelle en utilisant des données cartographiques relatives à une pluralité de catégories de risques terrestres, dans lequel la déduction de la carte de responsabilité comprend la catégorisation d'une zone de la carte dans l'une de la pluralité de catégories de risques terrestres, dans lequel chaque catégorie de risque terrestre est associée à un type de risque différent sur une surface terrestre ; et
dans lequel la carte de responsabilité bidimensionnelle comprend une pluralité de valeurs de responsabilité en cas de risque (L1) associées à la pluralité de catégories de risques terrestres ; et
utiliser la carte de responsabilité bidimensionnelle pour commander un ou plusieurs paramètres de commande de vol du système d'aéronef, moyennant quoi ledit système de commande de vol peut fonctionner pour déduire la carte de responsabilité bidimensionnelle par :
division d'une région d'intérêt de surface terrestre en une grille bidimensionnelle discrétisée ;
pour chaque élément de la grille, la déduction d'une zone de cet élément qui se trouve au sein d'une catégorie de risque terrestre pertinente ;
pour chaque catégorie de risque terrestre, l'estimation d'une valeur de conséquence (C_{Y}) basée sur une ou plusieurs caractéristiques du système d'aéronef ; et
pour chaque élément de la grille, l'estimation d'une première valeur de responsabilité en cas de risque (L1) basée sur la zone déduite et la valeur de conséquence estimée.

12. Procédé de détermination d'une valeur de responsabilité en cas de risque associée au vol d'un système d'aéronef en rapport avec des dangers présents sur une surface terrestre, le procédé comprenant :
la déduction (1401) d'une carte de responsabilité bidimensionnelle en utilisant des données cartographiques relatives à une pluralité de catégories de risques terrestres, dans lequel la déduction de la carte de responsabilité comprend la catégorisation d'une zone de la carte dans l'une de la pluralité de catégories de risques terrestres, dans lequel chaque catégorie de risque terrestre est associée à un type de risque différent sur une surface terrestre ; et
dans lequel la carte de responsabilité bidimensionnelle comprend une pluralité de valeurs de responsabilité en cas de risque (L1) associées à la pluralité de catégories de risques terrestres ; et
l'utilisation (1402) de la carte de responsabilité bidimensionnelle pour déterminer une valeur de responsabilité en cas de risque (L_{FLIGHT}) associée à un vol, dans lequel la déduction de la carte de responsabilité bidimensionnelle comprend :
la division d'une région d'intérêt de surface terrestre en une grille bidimensionnelle discrétisée ;
pour chaque élément de la grille, la déduction d'une zone de cet élément qui se trouve au sein d'une catégorie de risque terrestre pertinente ;
pour chaque catégorie de risque terrestre, l'estimation d'une valeur de conséquence (C_{Y}) basée sur une ou plusieurs caractéristiques du système d'aéronef ; et
pour chaque élément de la grille, l'estimation d'une première valeur de responsabilité en cas de risque (L1) basée sur la zone déduite et la valeur de conséquence estimée.

13. Moteur de responsabilité en cas de risques (1500) destiné à déterminer une valeur d'une responsabilité en cas de risque associée à un vol d'un système d'aéronef en relation avec des dangers sur une surface terrestre, le moteur de responsabilité en cas de risques comprenant un processeur (1501) et une mémoire (1503), ladite mémoire (1503) contenant des instructions exécutables par ledit processeur (1501), moyennant quoi ledit moteur de responsabilité en cas de risques (1500) peut fonctionner pour :
déduire une carte de responsabilité bidimensionnelle en utilisant des données cartographiques relatives à une pluralité de catégories de risques terrestres, dans lequel la déduction de la carte de responsabilité comprend la catégorisation d'une zone de la carte dans l'une de la pluralité de catégories de risques terrestres, dans lequel chaque catégorie de risque terrestre est associée à un type de risque différent sur une surface terrestre ; et
dans lequel la carte de responsabilité bidimensionnelle comprend une pluralité de valeurs de responsabilité en cas de risque (L1) associées à la pluralité de catégories de risques terrestres ; et
utiliser la carte de responsabilité bidimensionnelle pour déterminer une valeur de responsabilité en cas de risque (L_{FLIGHT}) associée à un vol, dans lequel la déduction de la carte de responsabilité bidimensionnelle comprend :
la division d'une région d'intérêt de surface terrestre en une grille bidimensionnelle discrétisée ;
pour chaque élément de la grille, la déduction d'une zone de cet élément qui se trouve au sein d'une catégorie de risque terrestre pertinente ;
pour chaque catégorie de risque terrestre, l'estimation d'une valeur de conséquence (C_{Y}) basée sur une ou plusieurs caractéristiques du système d'aéronef ; et
pour chaque élément de la grille, l'estimation d'une première valeur de responsabilité en cas de risque (L1) basée sur la zone déduite et la valeur de conséquence estimée.
